# FASCICULE DE BREVET EUROPEEN

(11) **EP 0 940 662 B1**
(45) Date de publication et mention de la délivrance du brevet: **14.12.2011**
(21) Numéro de dépôt: 99410008.9
(22) Date de dépôt: 15.02.1999
(51) Int. Cl.: G01K 11/32

(54) **Sonde à fibres optiques**
Faseroptische Sonde
Fiber-optic probe

(30) Priorité: 06.03.1998 FR 9803000
(43) Date de publication de la demande: 08.09.1999
(73) Titulaire: Schneider Electric Industries SAS, 92500 Rueil-Malmaison (FR)
(72) Inventeur: Persegol, Dominique, Schneider Electric S.P.I., 38050 Grenoble Cedex 09 (FR); Minier, Vincent, Schneider Electric S.P.I., 38050 Grenoble Cedex 09 (FR); Lovato, Jean-Louis, Schneider Electric S.P.I., 38050 Grenoble Cedex 09 (FR); Petit, Christian, Schneider Electric S.P.I., 38050 Grenoble Cedex 09 (FR); Amblard, Pierre, Schneider Electric S.P.I., 38050 Grenoble Cedex 09 (FR); Hermil-Boudin, Alain, Schneider Electric S.P.I., 38050 Grenoble Cedex 09 (FR)
(74) Mandataire: Tripodi, Paul

(56) Documents cités:
- EP-A- 0 214 040
- EP-A- 0 716 291
- US-A- 4 215 275
- US-A- 5 348 396
- KENNETH A. JAMES: "FIBER-OPTIC FABRY-PEROT TEMPERATURE SENSOR" THIRD INTERNATIONAL CONFERENCE ON OPTICAL FIBER SENSORS, 13 - 14 février 1985, pages 144-146, XP002082060 SAN DIEGO (CA-USA)

## Description

L'invention concerne une sonde à fibres optiques comportant :
- une première fibre optique pour injecter un premier signal lumineux vers un capteur, et
- une seconde fibre optique pour recevoir un second signal lumineux provenant dudit capteur, ledit capteur étant disposé en face des extrémités des première et seconde fibres.

Les sondes à fibres optiques connues comportent généralement une ou deux fibres optiques qui émettent ou reçoivent des signaux lumineux de manière à mesurer des grandeurs physiques. Lorsque la sonde comporte une fibre optique unique les signaux lumineux peuvent être émis et reçus par la même fibre. Par exemple, un premier signal lumineux est envoyé pour exciter un capteur ou un dispositif sensible à la lumière et un second signal lumineux est émis, réfléchi ou transformé par ledit capteur ou dispositif. Dans des systèmes fonctionnant en mode réflexion, le second signal se propage dans la fibre en sens inverse par rapport au premier signal. Certaines sondes optiques nécessitent souvent des dispositifs pour séparer les premiers et les seconds signaux afin de pouvoir extraire une information représentative de la grandeur physique à mesurer. Ces dispositifs de séparation comportent généralement des systèmes optiques coûteux, encombrants et difficiles à régler.

Les sondes à deux fibres permettent d'éviter les dispositifs de séparation de signaux puisque le premier signal est véhiculé par une première fibre optique et le second signal est véhiculé par une seconde fibre optique. Dans des sondes connues, le premier signal est par exemple envoyé sur un capteur et le second signal est émis par ledit capteur vers la seconde fibre optique. Lesdites fibres optiques sont, de manière connue, disposées en parallèle côte à côte en face du capteur.

Les sondes à deux fibres sont donc plus simples à réaliser que les sondes à une fibre. Cependant, le second signal utile capté par la seconde fibre est faible car les angles d'ouverture des fibres optiques couvrent une surface très faible du capteur. Ainsi, puisque le second signal est plus faible, les sondes à deux fibres optiques sont généralement moins précises, notamment à cause des niveaux de bruit susceptibles de perturber les mesures.

L'invention a pour but une sonde à au moins deux fibres optiques ayant un rendement amélioré.

Pour atteindre ce but, une sonde selon l'invention comporte un support comportant des évidements pour maintenir les fibres optiques et le capteur, lesdits évidements étant disposés de manière à ce que des axes longitudinaux des première et seconde fibres optiques forment un premier angle prédéterminé supérieur à zéro degrés et inférieur à 180 degrés.

De préférence, les axes longitudinaux des première et seconde fibres optiques sont sensiblement symétriques par rapport à un axe de symétrie dirigé vers le capteur.

Dans un mode de réalisation particulier, les extrémités des fibres optiques sont découpées selon un second angle sensiblement égal à la moitié du premier angle.

Avantageusement, la sonde comporte un matériau solide transparent disposé entre les extrémités des fibres optiques et le capteur.

De préférence, le support comporte au moins une partie en matériau transparent, ladite partie étant située entre les évidements destinés à recevoir les extrémités des fibres optiques et l'évidement destiné à recevoir le capteur.

Par exemple, le capteur est un matériau luminescent excité par le premier signal lumineux injecté par la première fibre optique et renvoyant un signal lumineux d'intensité décroissante à la seconde fibre optique lorsque le premier signal lumineux est éteint, ledit premier signal lumineux étant intermittent.

Avantageusement, le matériau luminescent est un matériau fluorescent excité par un premier signal lumineux ayant une première longueur d'onde et renvoyant un second signal lumineux à une seconde longueur d'onde, la décroissance de l'intensité lumineuse du second signal étant représentative d'une grandeur physique à mesurer.

De préférence, le matériau fluorescent est du rubis sous forme de poudre ou de l'alexandrite sous forme de poudre.

Dans une utilisation particulière, le second signal lumineux est représentatif d'une valeur de température.

De préférence, les fibres optiques sont en matière plastique de diamètre supérieur ou égal à un demi-millimètre.

Selon une première variante, une distance entre les extrémités des fibres optiques et le capteur est comprise entre 0,5 mm et 4 mm, et le premier angle prédéterminé est compris entre 5 et 70 degrés.

Selon une seconde variante, une distance entre les extrémités des fibres optiques et le capteur est comprise entre 0,6 mm et 2,5 mm, et le premier angle prédéterminé est compris entre 20 et 60 degrés.

De préférence, une distance entre les extrémités des fibres optiques et le capteur est sensiblement égale à 1,3 mm et le premier angle prédéterminé est sensiblement égal à 25 degrés.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 montre une sonde selon un mode de réalisation connu,
- la figure 2 montre une sonde selon un premier mode de réalisation de l'invention,
- la figure 3 montre une sonde selon un second mode de réalisation de l'invention,
- la figure 4 montre une sonde selon un troisième mode de réalisation de l'invention,
- la figure 5 montre un support d'une sonde selon un mode de réalisation de l'invention,
- la figure 6 montre le support de sonde de la figure 5 selon une vue en coupe transversale,
- la figure 7 montre des courbes représentatives de l'amplitude d'un second signal lumineux en fonction d'un premier angle prédéterminé,
- les figures 8a et 8b représentent des signaux lumineux véhiculés par les fibres optiques des sondes selon des modes de réalisation de l'invention,
- la figure 9 montre un socle d'une sonde de température installé sur un conducteur électrique.

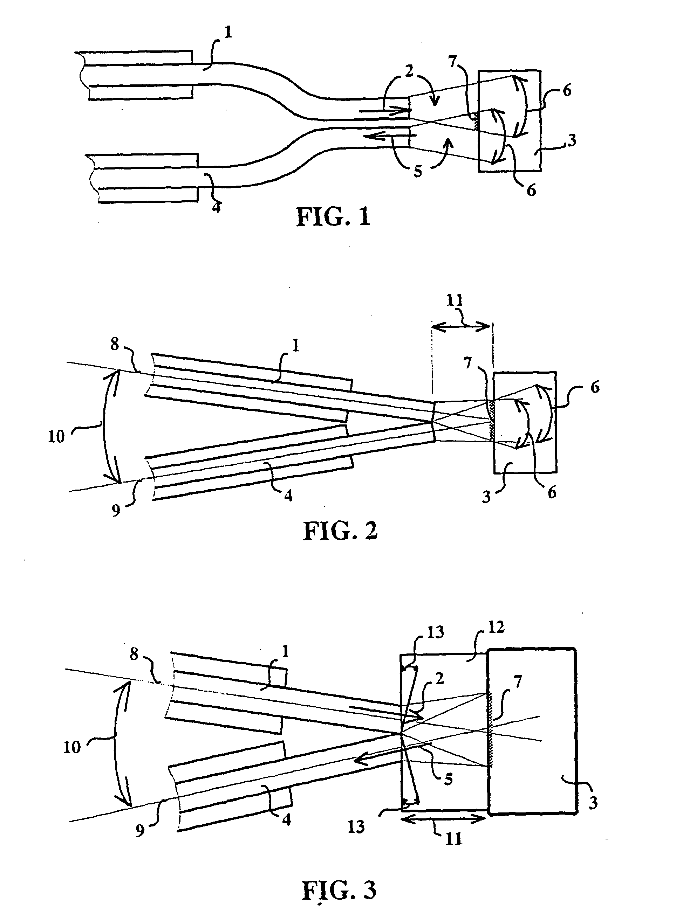

La sonde à fibres optiques de la figure 1 comporte une première fibre optique 1 pour injecter un premier signal lumineux 2 sur un capteur 3, et une seconde fibre optique 4 pour recevoir un second signal lumineux 5 provenant dudit capteur 3. Le premier signal lumineux 2 excite le capteur 3 qui réagit et émet à son tour le second signal lumineux 5.

Les deux fibres optiques sont de manière connue, disposées en parallèle côte à côte. Leurs extrémités peuvent émettre ou recevoir des signaux lumineux selon un angle d'ouverture 6 qui dépend des fibres optiques utilisées. Puisque les fibres sont disposées en parallèle, une petite partie 7 de la première zone du capteur 3 éclairée par la première fibre est commune avec l'angle d'ouverture de la seconde fibre. Cette partie 7 du capteur 3 dépend des angles d'ouverture 6 respectifs des fibres optiques. Ces angles d'ouverture correspondent généralement aux cônes de divergence des fibres. La surface de la partie 7 correspondant à l'intersection des angles d'ouverture des fibres optiques étant faible, l'amplitude utile du second signal lumineux 5 récupéré dans la seconde fibre est également faible. Par conséquent, le faible rendement de la sonde limite la précision de mesure d'une grandeur physique détectée par ladite sonde.

Dans une sonde selon un mode de réalisation de l'invention, la surface de la partie 7 du capteur 3 éclairée par le premier signal lumineux 2 de la première fibre optique et qui émet le second signal lumineux pouvant être injecté dans la seconde fibre optique est importante.

La figure 2 montre un mode de réalisation d'une sonde selon un mode de réalisation de l'invention. Pour augmenter la surface de la partie 7 du capteur 3 commune au recouvrement des angles d'ouverture des deux fibres optiques, en surface du capteur 3, les deux fibres optiques ne sont pas disposées en parallèle mais des axes longitudinaux 8 et 9 respectivement desdites première et seconde fibres optiques forment un premier angle 10 prédéterminé.

Ce premier angle formé par les fibres optiques est supérieur à zéro degré et inférieur à 180 degrés.

Dans ce mode de réalisation, la surface de la partie commune 7 est plus élevée et le rendement de la sonde est amélioré.

Un rendement maximal de la sonde peut être obtenu lorsque les deux angles d'ouverture des fibres optiques se recouvrent de manière optimale à la surface du capteur 3 réagissant à la lumière. Ainsi, pour assurer un rendement élevé, une distance 11 entre les extrémités des fibres optiques et la surface du capteur 3 recevant et émettant les signaux lumineux est déterminée en fonction de l'angle 10 entre les deux fibres.

De préférence, la bissectrice de l'angle 10 entre les deux axes longitudinaux est perpendiculaire au capteur 3. Cette bissectrice forme un axe de symétrie des deux fibres perpendiculaire au capteur 3.

Pour assurer, lors de la fabrication de la sonde, une distance 11 prédéterminée précise, un matériau 12 transparent et solide est intercalé entre les extrémités des fibres optiques 1 et 4 et le capteur 3. L'épaisseur du matériau 12 est égale à la distance 11 prédéterminée. Dans ce mode de réalisation les extrémités des fibres optiques sont découpées en biseau de manière à être plaquées contre le matériau transparent 12.

Dans le mode de réalisation de la figure 3, les extrémités des fibres optiques 1 et 4 sont découpées selon un second angle 13 par rapport à une perpendiculaire à l'axe longitudinal de chaque fibre. De préférence, ledit second angle 13 est sensiblement égal à la moitié de la valeur du premier angle 10.

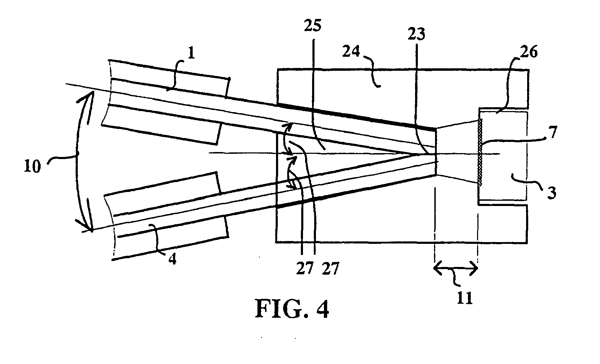

Dans un autre mode de réalisation représenté sur la figure 4, les extrémités des fibres sont découpées en biseau dans le sens longitudinal. Chaque fibre a une partie 23 biseautée selon un angle 27 sensiblement égal à la moitié de l'angle 10.

Les fibres optiques sont disposées dans un premier évidement 25 d'un support 24 pour être maintenues selon l'angle 10 prédéterminé. Les deux parties 23 biseautées de chaque fibre sont disposées l'une contre l'autre au fond de l'évidement 25. Un second évidement 26 disposé en face du premier évidement 25 reçoit le capteur 3, la distance 11 étant définie par les dimensions du support 24 qui comporte au moins une partie transparente entre les deux évidements 25 et 26.

Dans un mode de réalisation préférentiel de l'invention, une sonde comporte un support 14 pour maintenir les fibres optiques et le capteur 3. Le support est de préférence en matériau transparent laissant passer les signaux lumineux.

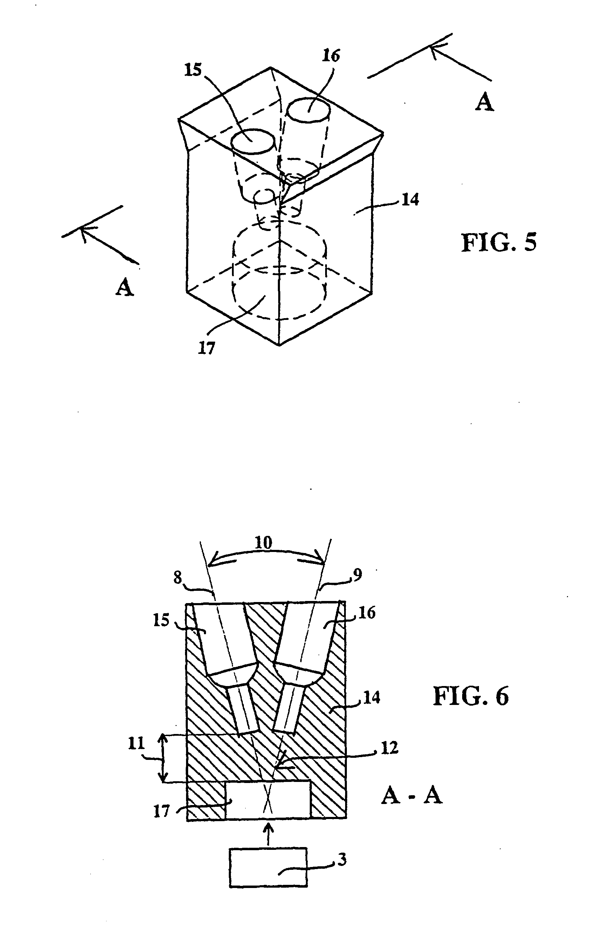

Les figures 5 et 6 montrent un mode de réalisation d'un tel support dans une vue en perspective et une vue en coupe transversale A-A. Ledit support 14 comporte un premier et un second évidements 15 et 16 pour recevoir la première et la seconde fibres optiques 1 et 4. Chaque évidement se compose de diamètres différents, un premier allant jusqu'au fond de l'évidement pour maintenir le coeur de la fibre optique et un second de diamètre plus grand pour maintenir une gaine de protection de ladite fibre. Des axes longitudinaux des évidements correspondant aux axes longitudinaux 8 et 9 des fibres optiques forment le premier angle prédéterminé 10.

Un troisième évidement 17, disposé dans le support 14 à l'opposé des premier et second évidements 15 et 16, est destiné à recevoir le capteur 3. La distance entre le fond du troisième évidement 17 et les fonds des premier et second évidements 15 et 16 correspond à la distance 11 prédéterminée.

Le support 14 peut être en totalité en matériau transparent ou essentiellement entre les fonds des évidements. Le matériau du support peut être notamment du polycarbonate.

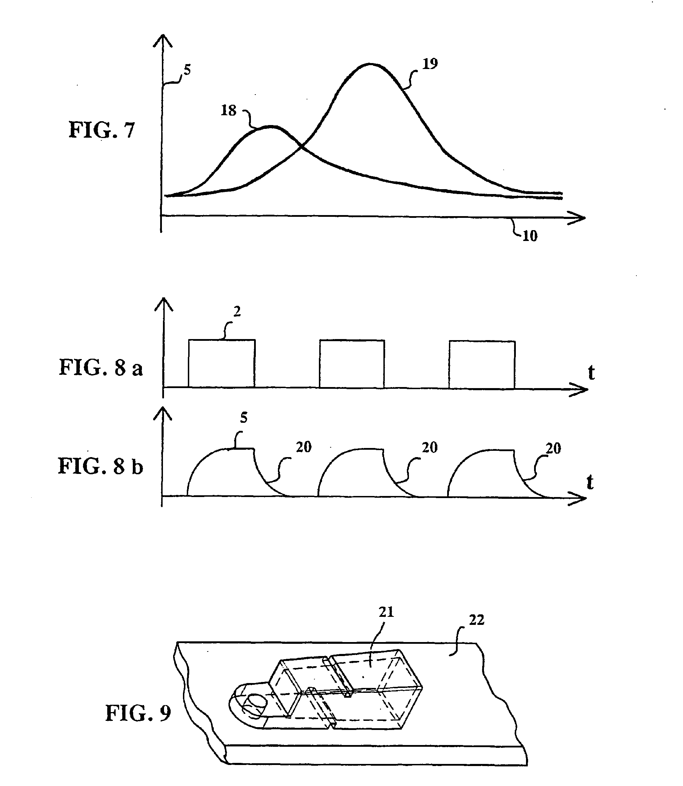

La distance 11 optimale pour avoir un rendement élevé dépend de l'angle 10. Ainsi, plus l'angle 10 est grand, plus la distance 11 doit être réduite pour avoir un rendement maximal de la sonde. La figure 7 montre deux courbes donnant l'allure de l'amplitude du second signal lumineux 5 en fonction de la valeur du premier angle 10 pour deux valeurs de distance 11. Sur une première courbe 18, la distance 11 est élevée et l'angle 10 pour une réponse optimale de la sonde est faible alors que sur une seconde courbe 19, la distance 11 est faible et l'angle 10 pour une réponse optimale de la sonde est élevée.

La distance 11 entre les extrémités des fibres et le capteur est de préférence comprise entre 0,5 mm et 4 mm pour un premier angle prédéterminé compris entre 5 et 70 degrés.

Avantageusement, des distances 11 comprises entre 0,6 mm et 2,5 mm pour un angle 10 compris entre 20 et 60 degrés permettent des rendements de la sonde plus élevés.

De préférence, la distance 11 est sensiblement égale à 1,3 mm et l'angle 10 est sensiblement égal à 25 degrés. Les fibres peuvent avoir leurs extrémités en contact ou être disposées à une distance faible l'une de l'autre.

Le capteur 3 est de préférence un matériau luminescent dont l'intensité lumineuse qu'il émet décroît après avoir été excité par une source de lumière. Avantageusement, le capteur 3 est un matériau fluorescent excité par le premier signal lumineux ayant une première longueur d'onde et émettant le second signal lumineux à une seconde longueur d'onde différente.

Dans une application d'une sonde selon un mode de réalisation de l'invention, la grandeur physique à mesurer est une valeur de température. Dans ce cas, le capteur 3 est de préférence du rubis sous forme de poudre. Le premier signal lumineux excite le rubis avec une longueur d'onde de préférence entre 500 et 600 nm et le second signal lumineux émet une longueur d'onde différente du premier par exemple 694 nm. Le second signal lumineux a une amplitude décroissante avec une constante de temps variable en fonction de la température. La figure 8A représente le premier signal lumineux 2 et la figure 8B montre une courbe représentative du second signal émis par un matériau tel que du rubis. Une partie 20 du signal 5 a une décroissance lorsque le premier signal 2 est arrêté.

Le matériau formant le capteur 3 peut également être de l'alexandrite sous forme de poudre.

Une sonde selon l'invention est avantageusement utilisée pour mesurer la température de conducteurs électriques ayant des tensions de fonctionnement élevées. Ainsi, puisque les fibres optiques ont une tenue diélectrique très élevée, elles permettent de maintenir isolés les différents points de mesure de température. De préférence, les fibres optiques sont des fibres en matière plastique ayant un diamètre au moins égal à un demi-millimètre, par exemple un diamètre de un millimètre.

Afin de pouvoir installer ou remplacer facilement des sondes selon des modes de réalisation de l'invention utilisées en sondes de température pour installations électriques à tension élevée, des socles 21 peuvent être fixés sur des conducteurs électriques 22. Ces socles sont adaptés pour recevoir des sondes avec des supports 14. De préférence, lesdits socles sont réalisés avec un matériau conducteur thermique. Un exemple d'une telle disposition est représenté sur la figure 9.

Lesdites sondes sont avantageusement utilisées dans des cellules de distribution électrique notamment en très haute tension, moyenne tension ou basse tension.

## Revendications

1. Sonde à fibres optiques comportant :
- une première fibre optique (1) pour véhiculer un premier signal lumineux (2) vers un capteur (3),
- une seconde fibre optique (4) pour recevoir un second signal lumineux (5) provenant dudit capteur (3), et
- un support comportant des évidements (15, 16, 17) pour maintenir les fibres optiques et le capteur (3), lesdits évidements étant disposés de manière à ce que des axes longitudinaux (8 et 9) des première et seconde fibres optiques (1 et 4) forment un premier angle (10) prédéterminé supérieur à zéro degrés et inférieur à 180 degrés,
ledit capteur (3) étant disposé en face des extrémités des première et seconde fibres, sonde **caractérisée en ce que** le capteur (3) est un matériau luminescent excité par le premier signal lumineux (2) injecté par la première fibre optique et renvoyant un signal lumineux (5) d'intensité décroissante (20) à la seconde fibre optique lorsque le premier signal lumineux (2) est éteint, ledit premier signal lumineux étant intermittent.

2. Sonde selon la revendication 1, **caractérisée en ce que** les axes longitudinaux (8 et 9) des première et seconde fibres optiques (1 et 4) sont sensiblement symétriques par rapport à un axe de symétrie dirigé vers le capteur (3).

3. Sonde selon l'une des revendications 1 ou 2, **caractérisée en ce que** les extrémités des fibres optiques sont découpées selon un second angle (13, 27) sensiblement égal à la moitié du premier angle (10).

4. Sonde selon l'une quelconque des revendications 1 à 3, **caractérisée en ce qu'**elle comporte un matériau solide transparent (12) disposé entre les extrémités des fibres optiques (1 et 4) et le capteur (3).

5. Sonde selon l'une quelconque des revendications 1 à 4, **caractérisée en ce que** le support comporte au moins une partie en matériau transparent (12), ladite partie étant située entre les évidements (15 et 16) destinés à recevoir les extrémités des fibres optiques (1 et 4) et l'évidement (17) destiné à recevoir le capteur.

6. Sonde selon l'une quelconque des revendications précédentes, **caractérisée en ce que** le matériau luminescent est un matériau fluorescent excité par un premier signal lumineux (2) ayant une première longueur d'onde et renvoyant un second signal lumineux (5) à une seconde longueur d'onde, la décroissance (20) de l'intensité lumineuse du second signal étant représentative d'une grandeur physique à mesurer.

7. Sonde selon la revendication 6, **caractérisée en ce que** le matériau fluorescent est du rubis sous forme de poudre.

8. Sonde selon la revendication 6, **caractérisée en ce que** le matériau fluorescent est de l'alexandrite sous forme de poudre.

9. Sonde selon l'une quelconque des revendications 1 à 8, **caractérisée en ce que** le second signal lumineux (5) est représentatif d'une valeur de température.

10. Sonde selon l'une quelconque des revendications 1 à 9, **caractérisée en ce que** les fibres optiques sont en matière plastique de diamètre supérieur ou égal à un demi-millimètre.

11. Sonde selon l'une des revendications 1 à 10, **caractérisée en ce qu'**une distance (11) entre les extrémités des fibres optiques et le capteur (3) est comprise entre 0,5 mm et 4 mm, et le premier angle prédéterminé (10) est compris entre 5 et 70 degrés.

12. Sonde selon l'une des revendications 1 à 10, **caractérisée en ce qu'**une distance (11) entre les extrémités des fibres optiques et le capteur (3) est comprise entre 0,6 mm et 2,5 mm, et le premier angle prédéterminé (10) est compris entre 20 et 60 degrés.

13. Sonde selon l'une des revendications 1 à 12, **caractérisée en ce qu'**une distance (11) entre les extrémités des fibres optiques et le capteur (3) est sensiblement égale à 1,3 mm et le premier angle prédéterminé (10) est sensiblement égal à 25 degrés.

## Claims

1. An optic fibre probe comprising:
- a first optic fibre (1) to convey a first light signal (2) to a sensor (3),
- a second optic fibre (4) to receive a second light signal (5) coming from said sensor (3), and
- a support comprising recesses (15, 16, 17) to secure the optic fibres and the sensor (3), said recesses being arranged in such a way that longitudinal axes (8 and 9) of the first and second optic fibres (1 and 4) form a first predefined angle (10) greater than zero degrees and smaller than 180°,
said sensor (3) being arranged facing ends of the first and second fibres,
a probe **characterized in that** the sensor (3) is made from light-emitting material excited by the first light signal (2) injected by the first optic fibre and sending a light signal (5) of decreasing intensity (20) to the second optic fibre when the first light signal (2) is extinguished, said first light signal being intermittent.

2. The probe according to claim 1, **characterized in that** the longitudinal axes (8 and 9) of the first and second optic fibres (1 and 4) are substantially symmetrical with respect to an axis of symmetry directed towards the sensor (3).

3. The probe according to one of claims 1 or 2, **characterized in that** the ends of the optic fibres are cut according to a second angle (13, 27) substantially equal to a half of the first angle (10).

4. The probe according to any one of claims 1 to 3, **characterized in that** it comprises a transparent solid material (12) arranged between the ends of the optic fibres (1 and 4) and the sensor (3).

5. The probe according to any one of claims 1 to 4, **characterized in that** the support comprises at least one part made from transparent material (12), said part being situated between the recesses (15 and 16) designed to receive the ends of the optic fibres (1 and 4) and the recess (17) designed to receive the sensor.

6. The probe according to any one of the foregoing claims, **characterized in that** the light-emitting material is a fluorescent material excited by a first light signal (2) having a first wavelength and sending a second light signal (5) at a second wavelength, the decrease (20) of the light intensity of the second signal being representative of a physical quantity to be measured.

7. The probe according to claim 6, **characterized in that** the fluorescent material is ruby in powder form.

8. The probe according to claim 6, **characterized in that** the fluorescent material is alexandrite in powder form.

9. The probe according to any one of claims 1 to 8, **characterized in that** the second light signal (5) is representative of a temperature value.

10. The probe according to any one of claims 1 to 9, **characterized in that** the optic fibres are made from plastic material with a diameter greater than or equal to half a millimetre.

11. The probe according to one of claims 1 to 10, **characterized in that** the distance (11) between the ends of the optic fibres and the sensor (3) is comprised between 0.5 mm and 4 mm, and the first predefined angle (10) is comprised between 5 and 70 degrees.

12. The probe according to one of claims 1 to 10, **characterized in that** the distance (11) between the ends of the optic fibres and the sensor (3) is comprised between 0.6 mm and 2.5 mm, and the first predefined angle (10) is comprised between 20 and 60 degrees.

13. The probe according to one of claims 1 to 12, **characterized in that** the distance (11) between the ends of the optic fibres and the sensor (3) is substantially equal to 1.3 mm and the first predefined angle (10) is substantially equal to 25 degrees.

## Patentansprüche

1. Lichtleitfaser-Messfühler mit
- einer ersten Lichtleitfaser (1) zur Übertragung eines ersten Lichtsignals (2) an einen Messwertgeber (3),
- einer zweiten Lichtleitfaser (4) zur Aufnahme eines vom genannten Messwertgeber (3) ausgesandten zweiten Lichtsignals (5) sowie
- einem Träger mit mehreren Ausnehmungen (15, 16, 17) zur Halterung der Lichtleitfasern und des Messwertgebers (3), welche Ausnehmungen so angeordnet sind, dass die Längsachsen (8 und 9) der ersten und der zweiten Lichtleitfaser (1 und 4) einen bestimmten ersten Winkel (10) bilden, der größer als 0 und kleiner als 180 Grad ist,
wobei der genannte Messwertgeber (3) gegenüber den Enden der ersten und der zweiten Lichtleitfaser angeordnet ist,
welcher Messfühler **dadurch gekennzeichnet ist, dass** der Messwertgeber (3) aus einem Leuchtstoff besteht, der von dem über die erste Lichtleitfaser übertragenen ersten Lichtsignal (2) angeregt wird und ein Lichtsignal (5) mit abnehmender Lichtstärke (20) in die zweite Lichtleitfaser einleitet, wenn das erste Lichtsignal (2) erloschen ist, wobei das genannte erste Lichtsignal ein intermittierendes Signal darstellt.

2. Messfühler nach Anspruch 1, **dadurch gekennzeichnet, dass** die Längsachsen (8 und 9) der ersten und der zweiten Lichtleitfaser (1 und 4) in Bezug zu einer auf den Messwertgeber (3) gerichteten Symmetrieachse annähernd symmetrisch angeordnet sind.

3. Messfühler nach Anspruch 1 oder 2, **dadurch gekennzeichnet, dass** die Enden der Lichtleitfasern in einem bestimmten zweiten Winkel (13, 27) abgeschnitten sind, der annähernd dem halben Wert des ersten Winkels (10) entspricht.

4. Messfühler nach irgendeinem der Ansprüche 1 bis 3 **dadurch gekennzeichnet, dass** er einen lichtdurchlässigen Feststoff (12) umfasst, der zwischen den Enden der Lichtleitfasern (1 und 4) und dem Messwertgeber (3) angeordnet ist.

5. Messfühler nach irgendeinem der Ansprüche 1 bis 4, **dadurch gekennzeichnet, dass** der Träger mindestens einen Teilabschnitt aus einem lichtdurchlässigen Stoff (12) umfasst, welcher Teilabschnitt zwischen den Ausnehmungen (15 und 16) zur Aufnahme der Enden der Lichtleitfasern (1 und 4) und der Ausnehmung (17) zur Aufnahme des Messwertgebers angeordnet ist.

6. Messfühler nach irgendeinem der vorhergehenden Ansprüche, **dadurch gekennzeichnet, dass** der Leuchtstoff als fluoreszierender Stoff ausgebildet ist, der von einem ersten Lichtsignal (2) mit einer ersten Wellenlänge angeregt wird und ein zweites Lichtsignal (5) mit einer zweiten Wellenlänge aussendet, wobei die Abnahme (20) der Lichtstärke des zweiten Signals eine zu messende physikalische Größe abbildet.

7. Messfühler nach Anspruch 6, **dadurch gekennzeichnet, dass** der fluoreszierende Stoff als pulverförmiges Rubin ausgebildet ist.

8. Messfühler nach Anspruch 6, **dadurch gekennzeichnet, dass** der fluoreszierende Stoff als pulverförmiges Alexandrit ausgebildet ist.

9. Messfühler nach irgendeinem der Ansprüche 1 bis 8 **dadurch gekennzeichnet, dass** das zweite Lichtsignal (5) einen Temperaturwert abbildet.

10. Messfühler nach irgendeinem der Ansprüche 1 bis 9, **dadurch gekennzeichnet, dass** die Lichtleitfasern aus einem Kunststoff mit einem Durchmesser von größer oder gleich einem halben Millimeter bestehen.

11. Messfühler nach einem der Ansprüche 1 bis 10, **dadurch gekennzeichnet, dass** ein Abstand (11) zwischen den Lichtleitfasern und dem Messwertgeber (3) zwischen 0,5 mm und 4 mm und der erste bestimmte Winkel (10) zwischen 5 und 70 Grad beträgt.

12. Messfühler nach einem der Ansprüche 1 bis 10, **dadurch gekennzeichnet, dass** ein Abstand (11) zwischen den Lichtleitfasern und dem Messwertgeber (3) zwischen 0,6 mm und 2,5 mm und der erste bestimmte Winkel (10) zwischen 20 und 60 Grad beträgt.

13. Messfühler nach einem der Ansprüche 1 bis 12, **dadurch gekennzeichnet, dass** ein Abstand (11) zwischen den Enden der Lichtleitfasern und dem Messwertgeber (3) etwa 1,3 mm und der erste bestimmte Winkel (10) etwa 25 Grad beträgt.
